(19) Europäisches Patentamt / European Patent Office / Office européen des brevets

(11) EP 4 227 178 B1

(12) **EUROPEAN PATENT SPECIFICATION**

(45) Date of publication and mention of the grant of the patent:
**09.09.2026 Bulletin 2026/37**

(21) Application number: **22845222.3**

(22) Date of filing: **14.07.2022**

(51) International Patent Classification (IPC):
***B60W 10/06*** *(2006.01)* ***B60W 30/182*** *(2020.01)*
***B60W 10/08*** *(2006.01)* ***B60W 10/02*** *(2006.01)*
***B60W 20/20*** *(2016.01)* ***B60K 6/442*** *(2007.10)*
***B60K 6/38*** *(2007.10)* ***B60K 6/387*** *(2007.10)*
***B60W 10/26*** *(2006.01)* ***B60W 20/11*** *(2016.01)*
***B60W 20/13*** *(2016.01)* ***B60W 20/40*** *(2016.01)*
***B60W 40/13*** *(2012.01)* ***B60W 30/20*** *(2006.01)*

(52) Cooperative Patent Classification (CPC):
**B60W 20/20; B60K 6/38; B60K 6/387; B60K 6/442; B60W 10/02; B60W 10/023; B60W 10/06; B60W 10/08; B60W 10/26; B60W 20/11;**
B60W 2030/203; B60W 2030/206; B60W 2040/1361; B60W 2040/1376; B60W 2510/0208; (Cont.)

(86) International application number:
**PCT/CN2022/105713**

(87) International publication number:
**WO 2023/001057 (26.01.2023 Gazette 2023/04)**

# (54) CONTROL METHOD FOR SWITCHING SERIES-PARALLEL CONNECTION DRIVING MODES FOR HYBRID ELECTRIC VEHICLE

STEUERUNGSVERFAHREN ZUM SCHALTEN VON SERIELL-PARALLELVERBINDUNGS-FAHRMODI FÜR EIN ELEKTRISCHES HYBRIDFAHRZEUG

PROCÉDÉ DE COMMANDE POUR COMMUTER LES MODES D’ENTRAÎNEMENT DE CONNEXION EN SÉRIE-PARALLÈLE POUR VÉHICULE ÉLECTRIQUE HYBRIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.07.2021 CN 202110813193**

(43) Date of publication of application:
**16.08.2023 Bulletin 2023/33**

(73) Proprietor: **China Faw Co., Ltd.**
**Changchun, Jilin 130011 (CN)**

(72) Inventors:
- **ZHU, Hao**
  **Changchun, Jilin 130011 (CN)**
- **WANG, Deping**
  **Changchun, Jilin 130011 (CN)**
- **XU, Jialiang**
  **Changchun, Jilin 130011 (CN)**
- **LIU, Jiaming**
  **Changchun, Jilin 130011 (CN)**

(74) Representative: **Novagraaf Group**
**Chemin de l’Echo 3**
**1213 Onex (CH)**

(56) References cited:
**CN-A- 104 842 992**
**CN-A- 106 553 639**
**CN-A- 110 979 307**
**CN-A- 113 386 730**
**DE-A1- 102008 053 505**
**DE-A1- 102015 222 692**
**DE-A1- 102015 224 077**
**JP-A- 2000 299 903**
**JP-A- 2013 052 710**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
B60W 2510/0638; B60W 2510/0657;
B60W 2510/0695; B60W 2510/081;
B60W 2510/083; B60W 2510/088; B60W 2510/244;
B60W 2540/10; B60W 2710/021; B60W 2710/0644;
B60W 2710/0666; B60W 2710/081;
B60W 2710/083; Y02T 10/62

## Description

### Cross-Reference to Related Application

The present invention claims the priority of Chinese Patent Application No.202110813193.2, filed in the China Patent Office on July 19, 2021.

### Technical Field

The present invention relates to the technical field of vehicle control, and in particular to a control method for switching series-parallel driving modes of hybrid electric vehicle.

### Background

In recent years, a dual-motor hybrid configuration has been confirmed to be a more easily implemented hybrid power configuration, and facilitate the switching between a hybrid electric vehicle (Hybrid Electric Vehicle, HEV) and a plug in hybrid electric vehicle (Plug in Hybrid Electric Vehicle, PHEV). In response to the whole vehicle being at medium and low speeds, a clutch is separated, the whole vehicle works in a series driving mode and is driven by a driving motor, an engine stops or works in an economic power generation area; in response to the whole vehicle being at medium and high speeds, the clutch is actuated, the whole vehicle works in a parallel driving mode, the engine directly drives the vehicle at a fixed speed ratio, and the load of the engine can be adjusted by the driving motor, so that the engine still works in a low-oil-consumption economic area; and through the implementation of the above solutions, hundred-kilometer oil consumption less than 4L can be obtained under the new European driving cycle (New European Driving Cycle, NEDC) condition.

Due to the variability of the conditions of the whole vehicle, it relates to frequent series-parallel switching control of the driving mode of the whole vehicle, including new switching control caused by a change in the switching intention during a mode switching process period. Therefore, an efficient and reliable control method for switching series-parallel driving modes becomes particularly important.

DE 102008053505A1, DE 102015222692A1 and DE 102015224077A1 provide respective technical solutions; however, the above mentioned problem still remains unsolved.

### Summary

At least some embodiments of the present invention provides a control method for switching series-parallel driving modes of hybrid electric vehicle, which adapt to the variability of the conditions of the whole vehicle and adapt to a change in the switching intention during a mode switching process time period, is efficient and reliable, realizes a clear control strategy, and is convenient for calibration and application.

The present invention utilizes the following technical solutions:

A control method for switching series-parallel driving modes of hybrid electric vehicle, wherein the control method includes:

S1: determining a switching state of a driving mode of the hybrid electric vehicle, wherein the switching state includes that the driving mode of the hybrid electric vehicle is switched from a series driving mode to a parallel driving mode, and that the driving mode of the hybrid electric vehicle is switched from the parallel driving mode to the series driving mode;

S2: in response to the switching state being that the driving mode of the hybrid electric vehicle is switched from the series driving mode to the parallel driving mode, performing step S21 to step S24:

S21: adjusting a working point of an engine to a parameters in the parallel driving mode, determining whether the driving mode of the hybrid vehicle is switched to the series driving mode, in response to the driving mode of the hybrid vehicle being switched to the series driving mode, performing step S33, and in response to the driving mode of the hybrid vehicle being not switched to the series driving mode, performing step S22;

S22: actuating a clutch, determining whether the driving mode of the hybrid electric vehicle is switched to the series driving mode, in response to the driving mode of the hybrid electric vehicle being switched to the series driving mode, performing step S32, and in response to the driving mode of the hybrid electric vehicle being not switched to the series driving mode, performing step S23;

S23: switching a power source of the hybrid electric vehicle to the power source required in the parallel driving

mode, determining whether the driving mode of the hybrid electric vehicle is switched to the series driving mode, in response to the driving mode of the hybrid electric vehicle being switched to the series driving mode, performing step S31, and in response to the driving mode of the hybrid electric vehicle being not switched to the series driving mode, performing step S24;

S24: controlling the whole vehicle to enter the parallel driving mode;

S3: in response to the switching state being that the driving mode of the hybrid electric vehicle is switched from the parallel driving mode to the series driving mode, performing step S31 to step S34:

S31: switching the power source of the hybrid electric vehicle to the power source required in the series driving mode, determining whether the driving mode of the hybrid electric vehicle is switched to the parallel driving mode, in response to the driving mode of the hybrid electric vehicle being switched to the parallel driving mode, performing step S23, and in response to the driving mode of the hybrid electric vehicle being not switched to the parallel driving mode, performing step S32;
S32: separating the clutch, determining whether the driving mode of the hybrid electric vehicle is switched to the parallel driving mode, in response to the driving mode of the hybrid electric vehicle being switched to the parallel driving mode, performing step S22, and in response to the driving mode of the hybrid electric vehicle being not switched to the parallel driving mode, performing step S33;
S33: adjusting the working point of the engine to the parameters in the series driving mode, determining whether the driving mode of the hybrid vehicle is switched to the parallel driving mode, in response to the driving mode of the hybrid vehicle being switched to the parallel driving mode, performing step S21, and in response to the driving mode of the hybrid vehicle being not switched to the parallel driving mode, performing step S34;
S34: controlling the whole vehicle to enter the series driving mode.

An embodiment of the present invention further provides a vehicle, including:

at least one processor; and
a memory, configured to store at least one program; and
in response to the at least one program being executed by the at least one processor, the at least one processor is configured to implement the control method according to the present invention for switching the series-parallel driving modes of hybrid electric vehicle.

An embodiment of the present invention further provides a computer-readable storage medium, wherein the computer-readable storage medium is configured to store a computer program, and in response to executed by a processor, the program implements the control method according to the present invention for switching the series-parallel driving modes of hybrid electric vehicle.

## Brief Description of the Drawings

Fig. 1 is a schematic diagram of a connecting structure of an engine, a generator and a driving motor according to an embodiment of the present invention;
Fig. 2 is a flowchart of a control method for switching series-parallel driving modes of hybrid electric vehicle according to an embodiment of the present invention.

In the drawings:
1. Engine; 2. Generator; 3. Clutch; 4. Driving motor; 5. Main speed reducer and differential; 6. Gear pair.

## Detailed Description

The technical solutions of the embodiments of the present invention will be described below in combination with the drawings, and the described embodiments are some embodiments of the present invention, but are not all embodiments.
In the description of the present invention, unless otherwise specified and limited expressly, the terms "connected", "connection" and "fixed" should be broadly understood, for example, the connection can be a fixed connection, a detachable connection, or a whole; can be a mechanical connection or an electrical connection; can be directly connected

or indirectly connected through an intermediate medium, and can be internal communication between two elements or an interaction relationship between the two elements. Those ordinary skilled in the art can understand the meanings of the above terms in the present invention according to specific situations.

In the present invention, unless otherwise specified and limited expressly, a first feature being "above" or "below" a second feature can include that the first feature is in direct contact with the second feature, and can also include that the first feature and the second feature are not in direct contact, but are in contact by means of another feature there between. Moreover, the first feature being "on top of" "above" and "over" the second feature include that the first feature is directly above and obliquely above the second feature, or indicates that the horizontal height of the first feature is higher than that of the second feature. The first feature being "under", "below" and "underneath" the second feature includes that the first feature is directly below and obliquely below the second feature, or indicates that the horizontal height of the first feature is less than that of the second feature.

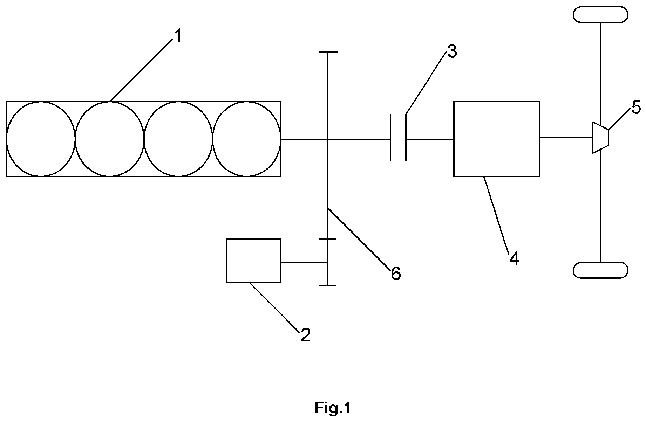

The present embodiment provides a vehicle, as shown in Fig. 1, the vehicle includes an engine (1), a generator (2), a clutch (3), a driving motor (4), a main speed reducer and differential (5) and a gear pair (6), wherein the engine (1) is connected with the generator (2) through the gear pair (6), the clutch (3) is connected between the engine (1) and the driving motor (4), and the main speed reducer and differential (5) is connected between the driving motor (4) and a wheel axle.

In response to the vehicle being in a series driving mode, the clutch (3) is separated, the vehicle is driven through the driving motor (4), the engine (1) outputs a torque and is maintained at a desired rotating speed to ensure that a certain power generation power is output, and "peak clipping and valley filling" of the power of the engine is realized by charging and discharging a battery to maintain the engine (1) to work in a fuel economic area.

In response to the vehicle being in a parallel driving mode, the clutch (3) is actuated, a speed ratio of the rotating speed of the engine (1) to the vehicle speed is fixed, the engine (1) works in a zero-torque follow-up mode, and the engine (1) and the driving motor (4) jointly complete the driving of the whole vehicle In the parallel driving mode, the working state of the engine (1) has three sub-modes, which includes, driving and charging sub-mode, driving and boosting sub-mode, and oil cut-off of the engine sub-mode, and a driver’s demand torque, the torque of the engine and the torque of the driving motor have different allocation relationships in different sub-modes, therefore a target torque of the engine is also considered separately based on different sub-modes.

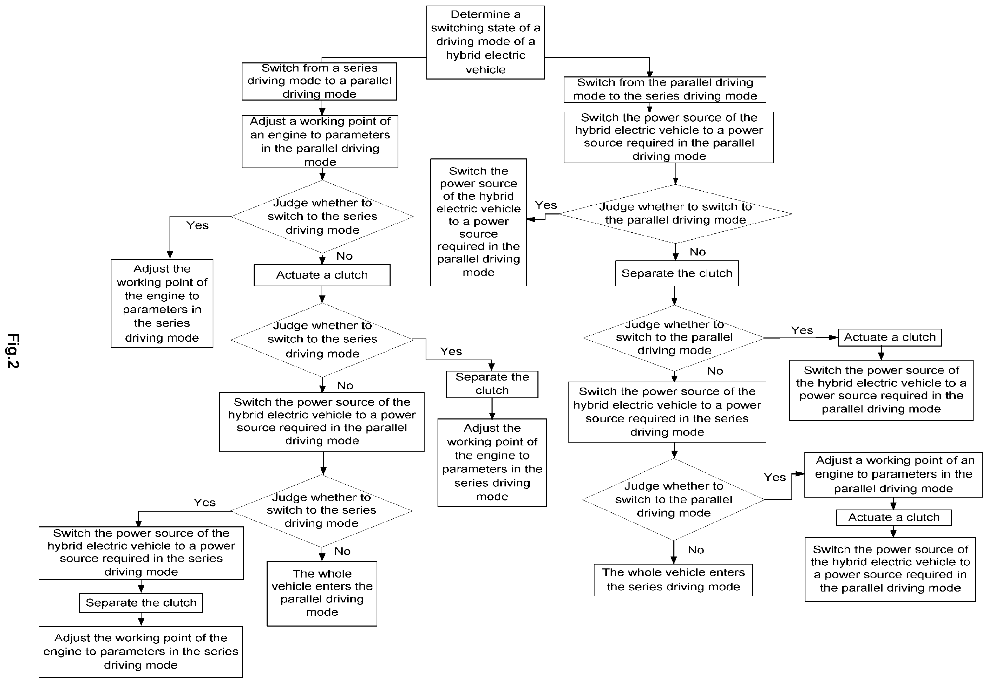

As shown in Fig. 2, the present embodiment provides a control method for switching series-parallel driving modes of hybrid electric vehicle, which is configured to the above vehicle. The control method includes:
In step S1: determining a switching state of a driving mode of hybrid electric vehicle.

The switching state of the driving mode of hybrid electric vehicle includes that the driving mode of the hybrid electric vehicle is switched from a series driving mode to a parallel driving mode, and that the driving mode of the hybrid electric vehicle is switched from the parallel driving mode to the series driving mode.

A vehicle controller judges, in real time, whether the vehicle (the hybrid electric vehicle) needs to be switched between the series driving mode and the parallel driving mode, and in response to the vehicle (the hybrid electric vehicle) needs to be switched between the series driving mode and the parallel driving mode, the vehicle controller determines whether the driving mode of the hybrid electric vehicle is switched from the series driving mode to the parallel driving mode or switched from the parallel driving mode to the series driving mode.

In step S2: in response to the switching state being that the driving mode of the hybrid electric vehicle is switched from the series driving mode to the parallel driving mode, the following steps are included:
In step S21: adjusting a working point of the engine (1) to the parameters in the parallel driving mode, determining whether the driving mode of the hybrid vehicle is switched to the series driving mode, in response to the driving mode of the hybrid vehicle being switched to the series driving mode, performing step S33, and in response to the driving mode of the hybrid vehicle being not switched to the series driving mode, performing step S22.

The torque of the engine (1) is adjusted to a target torque of the engine (1) in the parallel driving mode, and the rotating speed of the engine (1) is adjusted to be same as the rotating speed of the driving motor (4) in the current series driving mode.

It is determined in the present embodiment that, the target torque of the engine (1) is $T_{Eng_Tgt}$, the target torque of the driving motor (4) is $T_{Tm_Tgt}$, the target rotating speed of the engine (1) is $n_{Eng_Tgt}$, a request torque of the generator (2) is $T_{Gm_Tgt}$, and in the parallel driving mode, the working state of the engine (1) has three sub-modes, which includes, driving and charging sub-mode, driving and boosting sub-mode, and oil cut-off sub-mode of the engine (1), and

in the driving and charging sub-mode, $T_{Eng_Tgt} = \min(T_{Drv} - T_{Tm_PaSoc}, T_{Eng_PaMax})$.

In the driving and boosting sub-mode, $T_{Eng_Tgt} = \min(T_{Drv}, T_{Eng_PaMax})$.

In the oil cut-off sub-mode of the engine 1, $T_{Eng_Tgt} = -T_{Eng_Los}$.

$$T_{Tm_Tgt} = T_{Drv};\ n_{Eng_Tgt} = n_{Tm};\ T_{Gm_Tgt} = -T_{Eng_Act} + (J_{Eng} + J_{Gm} + J_{Gear})dn_{Eng_Tgt}/dt + T_{CL}.$$

In the formulas, $T_{Drv}$ denotes a driver demand torque, $T_{Tm_PaSoc}$ denotes a power generation negative torque of the driving motor (4) in the parallel driving mode, which is calculated on the basis of the current SoC, $T_{Eng_PaMax}$ denotes a torque upper limit value of the engine (1) in the parallel driving mode, $T_{Eng_Los}$ denotes a friction torque value of the engine (1) at the current rotating speed, $n_{Tm}$ denotes the current rotating speed of the driving motor (4), $T_{Eng_Act}$ denotes the actual torque of the engine (1), $J_{Eng}$ denotes the rotational inertia of the engine (1), $J_{Gm}$ denotes the rotational inertia of the generator (2), $J_{Gear}$ denotes the rotational inertia of a gear set between the engine (1) and the generator (2), and $T_{CL}$ denotes a speed regulation proportional integral (Proportional Integral, PI) torque.

Since the torque response of the engine (1) is slower than the torque response of the driving motor (4), the torque of the engine (1) is not adjusted as much as possible, and the torque of the whole vehicle is adjusted through the driving motor (4), then the torque of the engine (1) needs to be adjusted to the target torque of the engine (1) in the parallel driving mode in the present step. Meanwhile, in order to reduce the impact caused by a rotating speed difference of the clutch (3) in response to the clutch (3) being actuated, the rotating speed of the engine (1) needs to be adjusted to be same as the rotating speed of the driving motor (4) in the current series driving mode.

In the current step, the clutch (3) is not actuated, although the torque and the rotating speed of the engine (1) are adjusted to the parameters required in the parallel driving mode, the whole vehicle is still in the series driving mode, so that the driving motor (4) completes the driving of the whole vehicle.

In response to the torque and the rotating speed of the engine (1) being adjusted, it is judged in real time whether a difference value between the torque of the engine (1) and the target torque of the engine (1) is less than a preset torque difference value, and whether a difference value between the rotating speed of the engine (1) and the target rotating speed of the engine (1) is less than a preset rotating speed difference value; and in response to the difference value between the torque of the engine (1) and the target torque of the engine (1) being less than the preset torque difference value, and the difference value between the rotating speed of the engine (1) and the target rotating speed of the engine (1) is less than the preset rotating speed difference value, the clutch (3) can be actuated. Both the preset torque difference value and the preset rotating speed difference value are acquired based on tests, and the whole vehicle impact degree in an actuation stage of the clutch 3 and the power continuity in a power source alternating stage are mainly considered.

In the present embodiment, during the process of adjusting the working point of the engine (1) to the parameters in the parallel driving mode period, it is judged whether there is an instruction for switching to the series driving mode, in response to there is an instruction for switching to the series driving mode, the torque and the rotating speed of the engine (1) are configured to be adjusted to the parameters in the series driving mode, that is, the step S33 is performed, and the whole vehicle enters the series driving mode again.

In response to the whole vehicle enters the series driving mode again, the clutch (3) is in a separated state, so that the clutch (3) stills keeps the separated state, and the driving motor (4) completes the driving of the whole vehicle.

In step S22: actuating the clutch, determining whether the driving mode of the hybrid electric vehicle is switched to the series driving mode, in response to the driving mode of the hybrid electric vehicle being switched to the series driving mode, performing step S32, and in response to the driving mode of the hybrid electric vehicle being not switched to the series driving mode, performing step S23.

In the actuation stage of the clutch (3), an actuation request is sent to the clutch (3), and during the actuation process of the clutch (3) period, the generator (2) still maintains the rotating speed of the engine (1) to be consistent with the rotating speed of the driving motor (4) to ensure no impact during the actuation process of the clutch (3) period. The whole vehicle is still driven through the driving motor (4), therefore the control target of each component in the actuation stage of the clutch (3) is consistent with the working data of the engine (1) in the step S21.

Although the generator (2) has controlled a relatively small difference value between the rotating speed of the engine (1) and the rotating speed of the driving motor (4) in the step S21, in order to further reduce the impact of the actuation of the clutch (3), during the actuation process of the clutch (3) period, the oil pressure of the clutch (3) is also gradually increased, and an oil pressure loading speed needs to be acquired in combination with the performance of the whole vehicle.

Compared with the step S21, the clutch (3) is additionally controlled in the curent step, the actuation stage of the clutch (3) is individually set forth, so that the step S21 involves the dynamic adjustment of the torque and the rotating speed of the engine (1).

In the present embodiment, during the actuation process of the clutch (3) period, it is judged in real time whether there is an instruction for switching to the series driving mode, in response to there is an instruction for switching to the series driving mode, the step S32 is performed to execute a separation operation of the clutch (3), and after the clutch (3) is separated, the torque and the rotating speed of the engine (1) are respectively adjusted to target torque of the engine (1) and the target rotating speed of the engine (1) in the series driving mode, so that the whole vehicle enters the series driving mode again.

In step S23: switching the power source of the hybrid electric vehicle to a power source required in the parallel driving mode, determining whether the driving mode of the hybrid electric vehicle is switched to the series driving mode, in response to the driving mode of the hybrid electric vehicle being switched to the series driving mode, performing step S31,

and in response to the driving mode of the hybrid electric vehicle being not switched to the series driving mode, performing step S24.

The torque of the generator (2) is reduced to zero, the torque of the driving motor (4) is reduced, and the reduced torque of the driving motor (4) is same as the reduced torque of the generator (2) to switch the power source of the hybrid vehicle to the power source required in the parallel driving mode.

The output power of the engine (1) is switched from electric transmission to mechanical transmission, and the generator (2) gradually reduces the power generation torque, so that the torque of the engine (1) is released to the clutch (3), the driving motor (4) synchronously reduces the torque, and the reduced torque of the driving motor (4) is same as the reduced torque of the generator (2). Since the synchronous adjustment magnitude of the torque of the generator (2) is equal to the synchronous adjustment magnitude of the torque of the driving motor (4), it can be ensured that the total output torque of the engine (1), the generator (2) and the driving motor (4) is unchanged, and the continuity of the driving force is ensured.

After the torque of the generator (2) has been reduced to zero, and the torque of the driving motor (4) has been reduced to the target torque of the driving motor in the parallel driving mode, the whole vehicle enters the parallel driving mode.

It is determined in the present embodiment that, the target torque of the driving motor (4) is $T_{Tm_Tgt}$, and the request torque of the generator (2) is $T_{Gm_Tgt}$, and

$$\begin{cases} T_{Gm_Tgt} = \min\left(0, T^{*}_{Gm_Tgt} + \sum \Delta T_{Stp}\right) \\ T_{Tm_Tgt} = \min\left(T_{Drv} - T_{Eng_Act}, T^{*}_{Tm_Tgt} - \sum \Delta T_{Stp}\right) \end{cases}$$

In the formulas, $T_{Drv}$ denotes the driver demand torque, $T_{Eng_Act}$ denotes the actual torque of the engine (1), $\Delta T_{Stp}$ denotes a synchronous torque adjustment step length of the generator (2) and the driving motor (4), and $T^{*}_{Gm_Tgt}$ and $T^{*}_{Tm_Tgt}$ respectively denote output values in a previous calculation time period of the request torque of the generator (2) and the target torque of the driving motor (4).

In response to the first stage of the switching process ends, the torque of the engine (1) has been equal to the target torque of the engine (1) in the parallel driving mode, that is, both the engine (1) and the driving motor (4) can meet the driving torque demand of the whole vehicle currently, so that in a power source switching stage, the influence of the torque response difference of the engine (1) and the driving motor (4) on the dynamic performance of the whole vehicle does not need to be considered; and meanwhile, since there is no power interruption in the switching process, the requirement for the total switching duration is not high, so that the influence of the dynamic response time of the driving motor (4) on the switching process can be ignored.

During the process of switching to the power source required in the parallel driving mode time period, the conversion from "electric transmission" to "mechanical transmission" is realized, it is judged in real time whether the driving mode is switched to the series driving mode, in response to the driving mode needs to be switched to the series driving mode, "mechanical transmission" is converted into "electric transmission", that is, the step S31 is performed, so that the power source of the hybrid electric vehicle is switched to a power source required in the series driving mode, the power generation negative torque of the generator (2) is increased to absorb the torque of the engine (1), meanwhile, the torque absorbed through the generator (2) is transferred to the driving motor (4) at the same amplitude, and then the clutch (3) is separated. After the clutch (3) is separated, the working point of the engine (1) is adjusted to the parameters in the series driving mode, so that the whole vehicle enters the series driving mode.

In step S24: in response to the driving mode of the hybrid electric vehicle being not switched to the series driving mode, the whole vehicle enters the parallel driving mode.

In step S3: in response to the switching state being the driving mode of the hybrid electric vehicle is switched from the parallel driving mode to the series driving mode, the following steps are included:

In step S31: switching the power source of the hybrid electric vehicle to the power source required in the series driving mode, determining whether the driving mode of the hybrid electric vehicle is switched to the parallel driving mode, in response to the driving mode of the hybrid electric vehicle being switched to the parallel driving mode, performing step S23, and in response to the driving mode of the hybrid electric vehicle being not switched to the parallel driving mode, performing step S32.

The power generation negative torque of the generator (2) is increased to absorb the torque of the engine (1), and the torque absorbed by the generator (2) is transferred to the driving motor (4) at the same amplitude to switch the power source required in the series driving mode.

In the present embodiment, since electric transmission is realized after the clutch (3) is disconnected, before the

clutch (3) is disconnected, the switching of mechanical transmission to electric transmission needs to be realized, the torque of the engine (1) is absorbed through increasing the power generation negative torque through the generator (2), and meanwhile, the torque absorbed through the generator (2) is transferred to the driving motor (4) at the same amplitude, so that the conversion from the driving of the engine (1) to the driving of the driving motor (4) is realized **in** response to that the total driving torque is unchanged. Thereafter, all power of the engine (1) is absorbed by the generator (2), and thus there is no torque transfer at two ends of the clutch (3). After the torque of the engine (1) is completely absorbed through the generator (2), that is, the torque of the generator (2) is equal to the torque of the engine (1), the switching of the power source ends.

It is determined that the target torque of the engine (1) is $T_{Eng_Tgt}$, the target torque of the driving motor (4) is $T_{Tm_Tgt}$, the request torque of the generator (2) is $T_{Gm_Tgt}$, and in the parallel driving mode, the working state of the engine (1) has three sub-modes, which includes, driving and charging sub-mode, driving and boosting sub-mode, and oil cut-off sub-mode of the engine (1), and

in the driving and charging sub-mode, $T_{Eng_Tgt} = \min (T_{Dry} - T_{Tm_PaSoc}, T_{Eng_PaMax})$;

In the driving and boosting sub-mode, $T_{Eng_Tgt} = \min (T_{Drv}, T_{Eng_PaMax})$;

In the oil cut-off sub-mode of the engine (1), $T_{Eng_Tgt} = -T_{Eng_Los}$ ;

$$\begin{cases} T_{Gm_Tgt} = \max (-T_{Eng_Act}, T^*_{Gm_Tgt} - \sum \Delta T_{Stp}) \\ T_{Tm_Tgt} = \min (T_{Drv}, T^*_{Tm_Tgt} + \sum \Delta T_{Stp}) \end{cases}$$

In the formulas, $T_{Drv}$ denotes the driver demand torque, $T_{Tm_PaSoc}$ denotes the power generation negative torque of the driving motor (4) in the parallel driving mode, which is calculated on the basis of the current SoC, $T_{Eng_PaMax}$ denotes the torque upper limit value of the engine (1) in the parallel driving mode, $T_{Eng_Los}$ denotes the friction torque value of the engine (1) at the current rotating speed, $T_{Eng_Act}$ denotes the actual torque of the engine (1), $\Delta T_{Stp}$ denotes the synchronous torque adjustment step length of the generator (2) and the driving motor (4), and $T^*_{Gm_Tgt}$ and $T^*_{Tm_Tgt}$ respectively denote output values in the previous calculation period of the request torque of the generator (2) and the target torque of the driving motor (4).

During the process of switching the power source of the hybrid vehicle to the power source required in the series driving mode time period, it is judged in real time whether there is an instruction for switching to the parallel driving mode, in response to there is an instruction for switching to the parallel driving mode, the step S23 is performed, so that the generator (2) reduces the power generation torque to zero, the driving motor (4) synchronously reduces the torque, and the reduced torque of the driving motor (4) is same as the reduced torque of the generator (2), therefore the engine (1) and the driving motor (4) jointly drive the whole vehicle.

In step S32: separating the clutch, determining whether the driving mode of the hybrid electric vehicle is switched to the parallel driving mode, in response to the driving mode of the hybrid electric vehicle being switched to the parallel driving mode, performing step S22, and in response to the driving mode of the hybrid electric vehicle being not switched to the parallel driving mode, performing step S33.

In the present embodiment, in response to the torque of the generator (2) being equal to the torque of the engine (1), the torque of the driving motor (4) is adjusted to the target torque of the driving motor (4) in the series driving mode, and **in** response to the rotating speed of the engine (1) being same as the rotating speed of the driving motor (4), the clutch (3) is separated.

It is determined that the target torque of the driving motor (4) is $T_{Tm_Tgt}$, the target rotating speed of the engine (1) is $n_{Eng_Tgt}$, and the request torque of the generator (2) is $T_{Gm_Tgt}$, and

$$T_{Tm_Tgt} = T_{Drv};\ n_{Eng_Tgt} = n_{Tm};\ T_{Gm_Tgt} = -T_{Eng_Act} + (J_{Eng} + J_{Gm} + J_{Gear})dn_{Eng_Tgt}/dt + T_{CL};.$$

In the formulas, $T_{Drv}$ denotes the driver demand torque, $n_{Tm}$ denotes the current rotating speed of the driving motor (4), $T_{Eng_Act}$ denotes the actual torque of the engine (1), $J_{Eng}$ denotes the rotational inertia of the engine (1), $J_{Gm}$ denotes the rotational inertia of the generator (2), $J_{Gear}$ denotes the rotational inertia of the gear set between the engine (1) and the generator (2), and $T_{CL}$ denotes the speed regulation PI torque.

During the process of separating the clutch (3) time period, it is judged in real time whether there is an instruction for switching to the parallel driving mode, in response to there is an instruction for switching to the parallel driving mode, the step S22 is performed to convert the separation operation of the clutch (3) into an actuation operation of the clutch (3), and

in response to the torque of the engine (1) being still equal to the torque of the engine (1) in the parallel driving mode during this process time period, the generator (2) maintains the rotating speed of the engine (1) at the same rotating speed as the driving motor (4) based on a rotating speed control mode. After the clutch (3) is actuated again, the power source is switched to the power source required in the parallel driving mode, that is, the generator (2) reduces the power generation torque to zero, and the driving motor (4) synchronously reduces the torque according to the adjustment amount of the power generation torque of the generator (2), so that the whole vehicle enters the parallel driving mode again.

In step S33: in response to the driving mode of the hybrid vehicle being not switched to the parallel driving mode, adjusting the working point of the engine (1) to parameters in the series driving mode, determining whether the driving mode of the hybrid vehicle is switched to the parallel driving mode, in response to the driving mode of the hybrid vehicle being switched to the parallel driving mode, performing step S21, and in response to the driving mode of the hybrid vehicle being not switched to the parallel driving mode, performing step S34.

In the present embodiment, the torque and the rotating speed of the engine (1) are respectively adjusted to the target torque of the engine (1) and the target rotating speed of the engine (1) in the series driving mode.

After the clutch (3) is separated, the engine (1) has been disconnected from the driving motor (4), currently, the engine (1) has been in an "electric transmission" state, the torque and the rotating speed of the engine (1) are adjusted to the target torque of the engine (1) and the target rotating speed of the engine (1) in the series driving mode, and the driving motor (4) independently completes the driving of the whole vehicle. In this stage, the torque of the engine (1), the torque of the driving motor (4) and the rotating speed of the engine (1) are matched with corresponding data in the series driving mode, after the torque and the rotating speed of the engine (1) are adjusted to be similar to the target torque of the engine (1) and the target rotating speed of the engine (1) in the series driving mode, the torque and rotating speed adjustment stage of the engine (1) ends, and the whole vehicle enters the series driving mode.

It is determined that the target torque of the engine (1) is $T_{Eng_Tgt}$, and the target rotating speed of the engine (1) is $n_{Eng_Tgt}$, and

$$T_{Eng_Tgt} = T_{Eng_Se};\ \ n_{Eng_Tgt} = n_{Eng_Se};$$

and in the formulas, $T_{Eng_Se}$ and $n_{Eng_Se}$ respectively denote a torque value and a rotating speed value of the engine (1) at a target power-generation power point, which are calculated through a whole vehicle energy management module.

During the process of adjusting the working point of the engine (1) to the parameters in the series driving mode time period, the clutch (3) has been separated, the whole vehicle has entered the series driving mode, but the working point of the engine (1) is not adjusted to a target parameter value, currently, in response to the whole vehicle needs to enter the parallel driving mode again, the process of switching from the series driving mode to the parallel driving mode is executed in sequence, that is, step S21 to step S23 are executed, so that the whole vehicle enters the parallel driving mode again.

In step S34: in response to the driving mode of the hybrid electric vehicle being not switched to the parallel driving mode, the whole vehicle enters the series driving mode.

Based on the control method for switching the series-parallel driving modes of hybrid electric vehicle provided in the present invention, through analyzing the series-parallel driving modes of the whole vehicle, the process from the series driving mode to the parallel driving mode is divided into three stages, the process from the parallel driving mode to the series driving mode is also divided into three stages, and it is judged in each stage whether there is an intention of switching to another driving mode, thereby facilitating switching in time, improving the accuracy, reliability and high efficiency of vehicle control, realizing a clear control strategy, and facilitating calibration and application.

The nature of switching series driving to parallel driving is to implement, at a power level, the conversion from electric transmission to mechanical transmission of the engine (1) to a wheel end, and to implement, at a torque level, the conversion from independent driving of the driving motor (4) to joint driving of the engine (1) and the driving motor (4), firstly, the working point of the engine (1) is adjusted to the parameters in the parallel driving mode, and then the clutch (3) is actuated, thereby ensuring the consistency of the driving torque and the rotating speed of the whole vehicle during the switching process, and avoiding a switching impact, and meanwhile, the power source is switched in response to that the total driving torque is unchanged. In addition, the actuation or separation of the clutch (3) is individually set forth, which is beneficial for module function multiplexing.

Since the speed ratios among multiple components are different, in order to ensure that the torques and the rotating speeds of multiple components may be directly compared and operated, in the present embodiment, the rotating speeds and the torques of multiple components are converted to a fixed component according to a speed ratio relationship, that is, the engine (1) to achieve the consistency of reference points, and improve the control accuracy.

## Claims

1. A control method for switching series-parallel driving modes of hybrid electric vehicle, comprising:

   S1: determining a switching state of a driving mode of the hybrid electric vehicle, wherein the switching state comprises the driving mode of the hybrid electric vehicle is switched from a series driving mode to a parallel driving mode, and the driving mode of the hybrid electric vehicle is switched from the parallel driving mode to the series driving mode;
   S2: in response to the switching state being the driving mode of the hybrid electric vehicle is switched from the series driving mode to the parallel driving mode, performing step S21 to step S24:

      S21: adjusting a working point of an engine (1) to a parameters in the parallel driving mode, determining whether the driving mode of the hybrid vehicle is switched to the series driving mode, in response to the driving mode of the hybrid vehicle being switched to the series driving mode, performing step S33, and in response to the driving mode of the hybrid vehicle being not switched to the series driving mode, performing step S22;
      S22: actuating a clutch (3), determining whether the driving mode of the hybrid electric vehicle is switched to the series driving mode, in response to the driving mode of the hybrid electric vehicle being switched to the series driving mode, performing step S32, and in response to the driving mode of the hybrid electric vehicle being not switched to the series driving mode, performing step S23;
      S23: switching a power source of the hybrid electric vehicle to the power source required in the parallel driving mode, determining whether the driving mode of the hybrid electric vehicle is switched to the series driving mode, in response to the driving mode of the hybrid electric vehicle being switched to the series driving mode, performing step S31, and in response to the driving mode of the hybrid electric vehicle being not switched to the series driving mode, performing step S24;
      S24: controlling the whole vehicle to enter the parallel driving mode;

   S3: in response to the switching state being the driving mode of the hybrid electric vehicle is switched from the parallel driving mode to the series driving mode, performing step S31 to step S34:

      S31: switching the power source of the hybrid electric vehicle to the power source required in the series driving mode, determining whether the driving mode of the hybrid electric vehicle is switched to the parallel driving mode, in response to the driving mode of the hybrid electric vehicle being switched to the parallel driving mode, performing step S23, and in response to the driving mode of the hybrid electric vehicle being not switched to the parallel driving mode, performing step S32;
      S32: separating the clutch (3), determining whether the driving mode of the hybrid electric vehicle is switched to the parallel driving mode, in response to the driving mode of the hybrid electric vehicle being switched to the parallel driving mode, performing step S22, and in response to the driving mode of the hybrid electric vehicle being not switched to the parallel driving mode, performing step S33;
      S33: adjusting the working point of the engine (1) to the parameters in the series driving mode, determining whether the driving mode of the hybrid vehicle is switched to the parallel driving mode, in response to the driving mode of the hybrid vehicle being switched to the parallel driving mode, performing step S21, and in response to the driving mode of the hybrid vehicle being not switched to the parallel driving mode, performing step S34;
      S34: controlling the whole vehicle to enter the series driving mode.

2. The control method for switching series-parallel driving modes of hybrid electric vehicle as claimed in claim 1, wherein the process of adjusting the working point of the engine (1) to the parameters in the parallel driving mode comprises: adjusting the torque of the engine (1) to a target torque of the engine (1) in the parallel driving mode, and adjusting the rotating speed of the engine (1) to be same as the rotating speed of a driving motor (4) in the current series driving mode.

3. The control method for switching series-parallel driving modes of hybrid electric vehicle as claimed in claim 2, wherein it is determined that the target torque of the engine (1) is $T_{Eng_Tgt}$, the target torque of the driving motor (4) is $T_{Tm_Tgt}$, the target rotating speed of the engine (1) is $n_{Eng_Tgt}$, a request torque of the generator (2) is $T_{Gm_Tgt}$, and in the parallel driving mode, the working state of the engine (1) has three sub-modes, which includes, driving and charging sub-mode, driving and boosting sub-mode, and oil cut-off sub-mode of the engine (1), and

in the driving and charging sub-mode, $T_{Eng_Tgt} = \min(T_{Drv} - T_{Tm_PaSoc}, T_{Eng_PaMax})$;
in the driving and boosting sub-mode, $T_{Eng_Tgt} = \min(T_{Drv}, T_{Eng_PaMax})$;
in the oil cut-off sub-mode of the engine (1), $T_{Eng_Tgt} = -T_{Eng\text{-}Los}$; $T_{Tm_Tgt} = T_{Dry}$; $n_{Eng_Tgt} = n_{Tm}$; $T_{Gm_Tgt} = T_{Eng_Act} + (J_{Eng} + J_{Gm} + J_{Gear})dn_{Eng_Tgt}/dt + T_{CL}$;
in the formulas, $T_{Drv}$ denotes a driver demand torque, $T_{Tm_PaSoc}$ denotes a power generation negative torque of the driving motor (4) in the parallel driving mode, which is calculated on the basis of the current SoC, $T_{Eng_PaMax}$ denotes a torque upper limit value of the engine (1) in the parallel driving mode, $T_{Eng_Los}$ denotes a friction torque value of the engine (1) at the current rotating speed, $n_{Tm}$ denotes the current rotating speed of the driving motor (4), $T_{Eng_Act}$ denotes the actual torque of the engine (1), $J_{Eng}$ denotes the rotational inertia of the engine (1), $J_{Gm}$ denotes the rotational inertia of the generator (2), $J_{Gear}$ denotes the rotational inertia of a gear set between the engine (1) and the generator (2), and $T_{CL}$ denotes a torque of speed regulation proportional integral (PI).

**4.** The control method for switching series-parallel driving modes of hybrid electric vehicle as claimed in claim 1, wherein the process of switching the power source of the hybrid electric vehicle to the power source required in the parallel driving mode comprises:
reducing the torque of the generator (2) to zero, and reducing the torque of the driving motor (4), wherein the reduced torque of the driving motor (4) is same as the reduced torque of the generator (2).

**5.** The control method for switching series-parallel driving modes of hybrid electric vehicle as claimed in claim 4, wherein it is determined that the target torque of the driving motor (4) is $T_{Tm_Tgt}$, and the request torque of the generator (2) is $T_{Gm_Tgt}$, and

$$\begin{cases} T_{Gm_Tgt} = \min(0, T^*_{Gm_Tgt} + \sum \Delta T_{Stp}) \\ T_{Tm_Tgt} = \min(T_{Drv} - T_{Eng_Act}, T^*_{Tm_Tgt} - \sum \Delta T_{Stp}) \end{cases};$$

in the formulas, $T_{Drv}$ denotes the driver demand torque, $T_{Eng_Act}$ denotes the actual torque of the engine (1), $\Delta T_{Stp}$ denotes a synchronous torque adjustment step length of the generator (2) and the driving motor (4), and $T^*_{Gm_Tgt}$ and $T^*_{Tm_Tgt}$ respectively denote output values in a previous calculation time period of the request torque of the generator (2) and the target torque of the driving motor (4).

**6.** The control method for switching series-parallel driving modes of hybrid electric vehicle as claimed in claim 1, wherein the step of switching the power source of the hybrid electric vehicle to the power source required in the series driving mode comprises:
increasing the torque of the generator (2) to absorb the torque of the engine (1), and transferring the torque absorbed through the generator (2) to the driving motor (4) at the same amplitude.

**7.** The control method for switching series-parallel driving modes of hybrid electric vehicle as claimed in claim 6, wherein it is determined the target torque of the engine (1) is $T_{Eng_Tgt}$, the target torque of the driving motor (4) is $T_{Tm_Tgt}$, the request torque of the generator (2) is $T_{Gm_Tgt}$, and in the parallel driving mode, the working state of the engine (1) has three sub-modes, which includes, driving and charging sub-mode, driving and boosting sub-mode, and oil cut-off of the engine (1) sub-mode, and

in the driving and charging sub-mode, $T_{Eng_Tgt} = \min(T_{Drv} - T_{Tm_PaSoc}, T_{Eng_PaMax})$;;
in the driving and boosting sub-mode, $T_{Eng_Tgt} = \min(T_{Drv}, T_{Eng_PaMax})$;
in the oil cut-off sub-mode of the engine (1), $T_{Eng_Tgt} = -T_{Eng_Los}$;

$$\begin{cases} T_{Gm_Tgt} = \max(-T_{Eng_Act}, T^*_{Gm_Tgt} - \sum \Delta T_{Stp}) \\ T_{Tm_Tgt} = \min(T_{Drv}, T^*_{Tm_Tgt} + \sum \Delta T_{Stp}) \end{cases}$$

in the formulas, $T_{Drv}$ denotes the driver demand torque, $T_{Tm_PaSoc}$ denotes the power generation negative torque of the driving motor (4) in the parallel driving mode, which is calculated on the basis of the current SoC, $T_{Eng_PaMax}$ denotes the torque upper limit value of the engine (1) in the parallel driving mode, $T_{Eng_Los}$ denotes the friction torque value of the engine (1) at the current rotating speed, $T_{Eng_Act}$ denotes the actual torque of the engine (1),

$\Delta T_{Stp}$ denotes the synchronous torque adjustment step length of the generator (2) and the driving motor (4), and $T^*_{Gm_Tgt}$ and $T^*_{Tm_Tgt}$ respectively denote output values in the previous calculation time period of the request torque of the generator (2) and the target torque of the driving motor (4).

**8.** The control method for switching series-parallel driving modes of hybrid electric vehicle as claimed in claim 1, wherein the process of separating the clutch (3) comprises:
in response to the torque of the generator (2) being equal to the torque of the engine (1), adjusting the torque of the driving motor (4) to the target torque of the driving motor (4) in the series driving mode, and in response to the rotating speed of the engine (1) being same as the rotating speed of the driving motor (4), separating the clutch (3).

**9.** The control method for switching series-parallel driving modes of hybrid electric vehicle as claimed in claim 8, wherein it is determined the target torque of the driving motor (4) is $T_{Tm_Tgt}$, the target rotating speed of the engine (1) is $n_{Eng_Tgt}$, and the request torque of the generator (2) is $T_{Gm_Tgt}$, and

$$T_{Tm_Tgt} = T_{Drv};\ \ n_{Eng_Tgt} = n_{Tm};\ \ T_{Gm_Tgt} = -T_{Eng_Act} + (J_{Eng} + J_{Gm} + J_{Gear})dn_{Eng_Tgt}/dt + T_{CL};$$

in the formulas, $T_{Drv}$ denotes the driver demand torque, $n_{Tm}$ denotes the current rotating speed of the driving motor (4), $T_{Eng_Act}$ denotes the actual torque of the engine (1), $J_{Eng}$ denotes the rotational inertia of the engine (1), $J_{Gm}$ denotes the rotational inertia of the generator (2), $J_{Gear}$ denotes the rotational inertia of the gear set between the engine (1) and the generator (2), and $T_{CL}$ denotes the speed regulation PI torque.

**10.** The control method for switching series-parallel driving modes of hybrid electric vehicle as claimed in claim 1, wherein the process of adjusting the working point of the engine (1) to the parameters in the series driving mode comprises:

respectively adjusting the torque and the rotating speed of the engine (1) to the target torque of the engine (1) and the target rotating speed of the engine (1) in the series driving mode;
determining the target torque of the engine (1) as $T_{Eng_Tgt}$, and determining the target rotating speed of the engine (1) as $n_{Eng_Tgt}$, and

$$T_{Eng_Tgt} = T_{Eng_Se};\ \ n_{Eng_Tgt} = n_{Eng_Se};$$

in the formulas, $T_{Eng_Se}$ and $n_{Eng_Se}$ respectively denote the torque value and the rotating speed value of the engine (1) at a target power-generation power point, which are calculated through a whole vehicle energy management module.

**11.** A vehicle, comprising:

at least one processor; and
a memory, configured to store at least one program; and
in response to the at least one program being executed by the at least one processor, the at least one processor is configured to implement the control method for switching the series-parallel driving modes of hybrid electric vehicle as claimed in any one of claims 1-10.

**12.** A computer-readable storage medium, wherein the computer-readable storage medium is configured to store a computer program, and in response to executed by a processor, the computer program implements the control method for switching the series-parallel driving modes of hybrid electric vehicle as claimed in any one of claims 1-10.

## Patentansprüche

**1.** Steuerungsverfahren zum Schalten von seriell-parallelen Fahrmodi eines Hybridelektrofahrzeugs, umfassend:

S1: Bestimmen eines Schaltzustands eines Fahrmodus des Hybridelektrofahrzeugs, wobei der Schaltzustand das Schalten des Fahrmodus des Hybridelektrofahrzeugs von einem seriellen Fahrmodus in einen parallelen Fahrmodus und das Umschalten des Fahrmodus des Hybridelektrofahrzeugs von dem parallelen Fahrmodus in den seriellen Fahrmodus umfasst;

S2: als Reaktion darauf, dass der Schaltzustand darin besteht, dass der Fahrmodus des Hybridelektrofahrzeugs von dem seriellen Fahrmodus in den parallelen Fahrmodus geschaltet wird, Durchführen von Schritt S21 bis Schritt S24:

S21: Einstellen eines Arbeitspunkts einer Antriebsmaschine (1) auf einen Parameter in dem parallelen Fahrmodus, Bestimmen, ob der Fahrmodus des Hybridfahrzeugs in den seriellen Fahrmodus geschaltet wird, als Reaktion darauf, dass der Fahrmodus des Hybridfahrzeugs in den seriellen Fahrmodus geschaltet wird, Durchführen von Schritt S33, und als Reaktion darauf, dass der Fahrmodus des Hybridfahrzeugs nicht in den seriellen Fahrmodus geschaltet wird, Durchführen von Schritt S22;
S22: Betätigen einer Kupplung (3), Bestimmen, ob der Fahrmodus des Hybridelektrofahrzeugs in den seriellen Fahrmodus geschaltet wird, als Reaktion darauf, dass der Fahrmodus des Hybridelektrofahrzeugs in den seriellen Fahrmodus geschaltet wird, Durchführen von Schritt S32, und als Reaktion darauf, dass der Fahrmodus des Hybridelektrofahrzeugs nicht in den seriellen Fahrmodus geschaltet wird, Durchführen von Schritt S23;
S23: Schalten einer Leistungsquelle des Hybridelektrofahrzeugs auf die in dem parallelen Fahrmodus erforderliche Leistungsquelle, Bestimmen, ob der Fahrmodus des Hybridelektrofahrzeugs in den seriellen Fahrmodus geschaltet wird, als Reaktion darauf, dass der Fahrmodus des Hybridelektrofahrzeugs in den seriellen Fahrmodus geschaltet wird, Durchführen von Schritt S31, und als Reaktion darauf, dass der Fahrmodus des Hybridelektrofahrzeugs nicht in den seriellen Fahrmodus geschaltet wird, Durchführen von Schritt S24;
S24: Steuern des gesamten Fahrzeugs, um in den parallelen Fahrmodus einzutreten;

S3: als Reaktion darauf, dass der Schaltzustand darin besteht, dass der Fahrmodus des Hybridelektrofahrzeugs von dem parallelen Fahrmodus in den seriellen Fahrmodus geschaltet wird, Durchführen von Schritt S31 bis Schritt S34:

S31: Schalten der Leistungsquelle des Hybridelektrofahrzeugs auf die in dem seriellen Fahrmodus erforderliche Leistungsquelle, Bestimmen, ob der Fahrmodus des Hybridelektrofahrzeugs in den parallelen Fahrmodus geschaltet wird, als Reaktion darauf, dass der Fahrmodus des Hybridelektrofahrzeugs in den parallelen Fahrmodus geschaltet wird, Durchführen von Schritt S23, und als Reaktion darauf, dass der Fahrmodus des Hybridelektrofahrzeugs nicht in den parallelen Fahrmodus geschaltet wird, Durchführen von Schritt S32;
S32: Trennen der Kupplung (3), Bestimmen, ob der Fahrmodus des Hybridelektrofahrzeugs in den parallelen Fahrmodus geschaltet wird, als Reaktion darauf, dass der Fahrmodus des Hybridelektrofahrzeugs in den parallelen Fahrmodus geschaltet wird, Durchführen von Schritt S22, und als Reaktion darauf, dass der Fahrmodus des Hybridelektrofahrzeugs nicht in den parallelen Fahrmodus geschaltet wird, Durchführen von Schritt S33;
S33: Einstellen des Arbeitspunkts der Antriebsmaschine (1) auf die Parameter in dem seriellen Fahrmodus, Bestimmen, ob der Fahrmodus des Hybridfahrzeugs in den parallelen Fahrmodus geschaltet wird, als Reaktion darauf, dass der Fahrmodus des Hybridfahrzeugs in den parallelen Fahrmodus geschaltet wird, Durchführen von Schritt S21, und als Reaktion darauf, dass der Fahrmodus des Hybridfahrzeugs nicht in den parallelen Fahrmodus geschaltet wird, Durchführen von Schritt S34;
S34: Steuern des gesamten Fahrzeugs, um in den seriellen Fahrmodus einzutreten.

**2.** Steuerungsverfahren zum Schalten von seriell-parallelen Fahrmodi eines Hybridelektrofahrzeugs nach Anspruch 1, wobei der Vorgang des Einstellens des Arbeitspunkts der Antriebsmaschine (1) auf die Parameter in dem parallelen Fahrmodus umfasst:
Einstellen des Drehmoments der Antriebsmaschine (1) auf ein Zieldrehmoment der Antriebsmaschine (1) in dem parallelen Fahrmodus und Einstellen der Drehzahl der Antriebsmaschine (1) auf die gleiche Drehzahl wie die Drehzahl eines Antriebsmotors (4) in dem aktuellen seriellen Fahrmodus.

**3.** Steuerungsverfahren zum Schalten von seriell-parallelen Fahrmodi eines Hybridelektrofahrzeugs nach Anspruch 2, wobei bestimmt wird, dass das Zieldrehmoment der Antriebsmaschine (1) $T_{Eng_Tgt}$ ist, das Zieldrehmoment des Antriebsmotors (4) $T_{Tm_Tgt}$ ist, die Zieldrehzahl der Antriebsmaschine (1) $n_{Eng_Tgt}$ ist, ein Anforderungsdrehmoment des Generators (2) $T_{Gm_Tgt}$ ist und in dem parallelen Fahrmodus der Arbeitszustand der Antriebsmaschine (1) drei Untermodi aufweist, die einen Fahr- und Ladeuntermodus, einen Fahr- und Boost-Untermodus und einen Ölabschaltungsuntermodus der Antriebsmaschine (1) einschließen und

in dem Fahr- und Ladeuntermodus, $T_{Eng_Tgt} = \min(T_{Drv} - T_{Tm_PaSoc}, T_{Eng_PaMax})$;
in dem Fahr- und Boost-Untermodus, $T_{Eng_Tgt} = \min(T_{Drv}, T_{Eng_PaMax})$;
in dem Ölabschaltungsuntermodus der Antriebsmaschine (1), $T_{Eng_Tgt} = -T_{Eng_Los}$;

$$T_{Tm_Tgt} = T_{Drv};\ n_{Eng_Tgt} = n_{Tm};\ T_{Gm_Tgt} = -T_{Eng_Act} + (J_{Eng} + J_{Gm} + J_{Gear})dn_{Eng_Tgt}/dt + T_{CL};$$

in den Formeln $T_{Drv}$ ein Fahreranforderungsdrehmoment bezeichnet, $T_{Tm_PaSoc}$ ein negatives Leistungserzeugungsdrehmoment des Antriebsmotors (4) in dem parallelen Fahrmodus bezeichnet, das auf Basis des aktuellen SoC berechnet wird, $T_{Eng_PaMax}$ einen Drehmomentobergrenzwert der Antriebsmaschine (1) in dem parallelen Fahrmodus bezeichnet, $T_{Eng_Los}$ einen
Reibungsdrehmomentwert der Antriebsmaschine (1) bei der aktuellen Drehzahl bezeichnet, $n_{Tm}$ die aktuelle Drehzahl des Antriebsmotors (4) bezeichnet, $T_{Eng_Act}$ das tatsächliche Drehmoment der Antriebsmaschine (1) bezeichnet, $J_{Eng}$ die Drehträgheit der Antriebsmaschine (1) bezeichnet, $J_{Gm}$ die Drehträgheit des Generators (2) bezeichnet, $J_{Gear}$ die Drehträgheit eines Getriebesatzes zwischen der Antriebsmaschine (1) und dem Generator (2) bezeichnet, und $T_{CL}$ ein Drehmoment der Proportional-Integral-Drehzahlregelung (PI-Drehzahlregelung) bezeichnet.

**4.** Steuerungsverfahren zum Schalten von seriell-parallelen Fahrmodi eines Hybridelektrofahrzeugs nach Anspruch 1, wobei der Vorgang des Schaltens der Leistungsquelle des Hybridelektrofahrzeugs auf die in dem parallelen Fahrmodus erforderliche Leistungsquelle umfasst:
Reduzieren des Drehmoments des Generators (2) auf null und Reduzieren des Drehmoments des Antriebsmotors (4), wobei das reduzierte Drehmoment des Antriebsmotors (4) gleich dem reduzierten Drehmoment des Generators (2) ist.

**5.** Steuerungsverfahren zum Schalten von seriell-parallelen Fahrmodi eines Hybridelektrofahrzeugs nach Anspruch 4, wobei bestimmt wird, dass das Zieldrehmoment des Antriebsmotors (4) $T_{Tm_Tgt}$ ist, und das Anforderungsdrehmoment des Generators (2) $T_{Gm_Tgt}$ ist und

$$\begin{cases} T_{Gm_Tgt} = \min(0, T^*_{Gm_Tgt} + \sum \Delta T_{Stp}) \\ T_{Tm_Tgt} = \min(T_{Drv} - T_{Eng_Act}, T^*_{Tm_Tgt} - \sum \Delta T_{Stp}) \end{cases},$$

in den Formeln $T_{Drv}$ das Fahreranforderungsdrehmoment bezeichnet, $T_{Eng_Act}$ das tatsächliche Drehmoment der Antriebsmaschine (1) bezeichnet, $\Delta T_{stp}$ eine synchrone Drehmoment-Einstellschrittweite des Generators (2) und des Antriebsmotors (4) bezeichnet und $T^*_{Gm_Tgt}$ und $T^*_{Tm_Tgt}$ jeweils Ausgabewerte in einer vorherigen Berechnungszeitspanne des Anforderungsdrehmoments des Generators (2) und des Zieldrehmoments des Antriebsmotors (4) bezeichnen.

**6.** Steuerungsverfahren zum Schalten von seriell-parallelen Fahrmodi eines Hybridelektrofahrzeugs nach Anspruch 1, wobei der Schritt des Schaltens der Leistungsquelle des Hybridelektrofahrzeugs auf die in dem seriellen Fahrmodus erforderliche Leistungsquelle umfasst:
Erhöhen des Drehmoments des Generators (2), um das Drehmoment der Antriebsmaschine (1) aufzunehmen, und Übertragen des durch den Generator (2) aufgenommenen Drehmoments auf den Antriebsmotor (4) mit der gleichen Amplitude.

**7.** Steuerungsverfahren zum Schalten von seriell-parallelen Fahrmodi eines Hybridelektrofahrzeugs nach Anspruch 6, wobei bestimmt wird, dass das Zieldrehmoment der Antriebsmaschine (1) $T_{Eng_Tgt}$ ist, das Zieldrehmoment des Antriebsmotors (4) $T_{Tm_Tgt}$ ist, das Anforderungsdrehmoment des Generators (2) $T_{Gm_Tgt}$ ist, und in dem parallelen Fahrmodus der Arbeitszustand der Anspruch (1) drei Untermodi aufweist, die einen Fahr- und Ladeuntermodus, einen Fahr- und Boost-Untermodus und einen Untermodus der Ölabschaltung der Antriebsmaschine (1) einschließen und

in dem Fahr- und Ladeuntermodus, $T_{Eng_Tgt} = \min(T_{Drv} - T_{Tm_PaSoc}$, TEng_PaMax);;
in dem Fahr- und Boost-Untermodus, $T_{Eng_Tgt} = \min(T_{Drv}, T_{Eng_PaMax})$;
in dem Ölabschaltungsuntermodus der Antriebsmaschine (1) $T_{Eng_Tgt} = -T_{Eng\ Los}$;

$$\begin{cases} T_{Gm_Tgt} = \max\left(-T_{Eng_Act}, T^*_{Gm_Tgt} - \sum \Delta T_{Stp}\right) \\ T_{Tm_Tgt} = \min\left(T_{Drv}, T^*_{Tm_Tgt} + \sum \Delta T_{Stp}\right) \end{cases}$$

in den Formeln, $T_{Drv}$ das Fahreranforderungsdrehmoment bezeichnet, $T_{Tm_PaSoc}$ das negative Leistungserzeugungsdrehmoment des Antriebsmotors (4) in dem parallelen Fahrmodus bezeichnet, das auf Basis des aktuellen SoC berechnet wird, $T_{Eng_PaMa}x$ den Drehmomentobergrenzwert der Antriebsmaschine (1) in dem parallelen Fahrmodus bezeichnet, $T_{Eng_Los}$ den Reibungsdrehmomentwert der Antriebsmaschine (1) bei der aktuellen Drehzahl bezeichnet, $T_{Eng_Act}$ das tatsächliche Drehmoment der Antriebsmaschine (1) bezeichnet, $\Delta T_{stp}$ die synchrone Drehmoment-Einstellschrittweite des Generators (2) und des Antriebsmotors (4) bezeichnet und $T^*_{Gm_Tgt}$ und $T^*_{Tm_Tgt}$ jeweils Ausgabewerte in der vorherigen Berechnungszeitspanne des Anforderungsdrehmoments des Generators (2) und des Zieldrehmoments des Antriebsmotors (4) bezeichnen.

**8.** Steuerungsverfahren zum Schalten von seriell-parallelen Fahrmodi eines Hybridelektrofahrzeugs nach Anspruch 1, wobei der Vorgang des Trennens der Kupplung (3) umfasst:
als Reaktion darauf, dass das Drehmoment des Generators (2) gleich dem Drehmoment der Antriebsmaschine (1) ist, Einstellen des Drehmoments des Antriebsmotors (4) auf das Zieldrehmoment des Antriebsmotors (4) in dem seriellen Antriebsmodus, und als Reaktion darauf, dass die Drehzahl der Antriebsmaschine (1) gleich der Drehzahl des Antriebsmotors (4) ist, Trennen der Kupplung (3).

**9.** Steuerungsverfahren zum Schalten von seriell-parallelen Fahrmodi eines Hybridelektrofahrzeugs nach Anspruch 8, wobei bestimmt wird, dass das Zieldrehmoment des Antriebsmotors (4) $T_{Tm_Tgt}$ ist, die Zieldrehzahl der Antriebsmaschine (1) $n_{Eng_Tgt}$ ist und das Anforderungsdrehmoment des Generators (2) $T_{Gm_Tgt}$ ist und

$T_{Tm_Tgt} = T_{Drv}$; $n_{Eng_Tgt} = n_{Tm}$; $T_{Gm_Tgt} = -T_{Eng_Act} + (J_{Eng} + J_{Gm} + J_{Gear}) dn_{Eng_Tgt}/dt + T_{CL}$;

in den Formeln $T_{Drv}$ das Fahreranforderungsdrehmoment bezeichnet, $n_{Tm}$ die aktuelle Drehzahl des Antriebsmotors (4) bezeichnet, $T_{Eng_Act}$ das tatsächliche Drehmoment der Antriebsmaschine (1) bezeichnet, $J_{Eng}$ die Drehträgheit der Antriebsmaschine (1) bezeichnet, $J_{Gm}$ die Drehträgheit des Generators (2) bezeichnet, $J_{Gear}$ die Drehträgheit des Getriebesatzes zwischen der Antriebsmaschine (1) und dem Generator (2) bezeichnet und $T_{CL}$ das Drehmoment der Drehzahlregelung, PI, bezeichnet.

**10.** Steuerungsverfahren zum Schalten von seriell-parallelen Fahrmodi eines Hybridelektrofahrzeugs nach Anspruch 1, wobei der Vorgang des Einstellens des Arbeitspunkts der Antriebsmaschine (1) auf die Parameter in dem seriellen Fahrmodus umfasst:

jeweiliges Einstellen des Drehmoments und der Drehzahl der Antriebsmaschine (1) auf das Zieldrehmoment der Antriebsmaschine (1) und die Zieldrehzahl der Antriebsmaschine (1) in dem seriellen Fahrmodus;
Bestimmen des Zieldrehmoments der Antriebsmaschine (1) als $T_{Eng_Tgt}$ und Bestimmen der Zieldrehzahl der Antriebsmaschine (1) als $n_{Eng_Tgt}$ und

$$T_{Eng_Tgt} = -T_{Eng_Se};\ n_{Eng_Tgt} = n_{Eng_Se};$$

in den Formeln $T_{Eng_Se}$ und $n_{Eng_Se}$ jeweils den Drehmomentwert und den Drehzahlwert der Antriebsmaschine (1) an einem Zielleistungserzeugungsleistungspunkt bezeichnen, die durch ein Gesamtfahrzeug-Energiemanagementmodul berechnet werden.

**11.** Fahrzeug, umfassend:

mindestens einen Prozessor; und
einen Speicher, der konfiguriert ist, um mindestens ein Programm zu speichern; und
als Reaktion darauf, dass das mindestens eine Programm durch den mindestens einen Prozessor ausgeführt wird, der mindestens eine Prozessor konfiguriert ist, um das Steuerungsverfahren zum Schalten der seriell-parallelen Fahrmodi eines Hybridelektrofahrzeugs nach einem der Ansprüche 1 bis 10 zu implementieren.

**12.** Computerlesbares Speichermedium, wobei das computerlesbare Speichermedium konfiguriert ist, um ein Compu-

terprogramm zu speichern, und als Reaktion auf die Ausführung durch einen Prozessor das Computerprogramm das Steuerungsverfahrens zum Schalten der seriell-parallelen Fahrmodi eines Hybridelektrofahrzeugs nach einem der Ansprüche 1 bis 10 implementiert.

## Revendications

**1.** Procédé de commande permettant de basculer entre des modes de conduite en série/en parallèle d'un véhicule électrique hybride, comprenant :

S1 : la détermination d'un état de basculement d'un mode de conduite du véhicule électrique hybride, dans lequel l'état de basculement comprend le fait que le mode de conduite du véhicule électrique hybride est basculé d'un mode de conduite en série à un mode de conduite en parallèle, et le mode de conduite du véhicule électrique hybride est basculé du mode de conduite en parallèle au mode de conduite en série ;

S2 : en réponse au fait que l'état de basculement est que le mode de conduite du véhicule électrique hybride est basculé du mode de conduite en série au mode de conduite en parallèle, la réalisation de l'étape S21 à l'étape S24 :

S21 : l'ajustement d'un point de fonctionnement d'un moteur (1) sur des paramètres dans le mode de conduite en parallèle, la détermination établissant si le mode de conduite du véhicule hybride est basculé vers le mode de conduite en série, en réponse au fait que le mode de conduite du véhicule hybride est basculé vers le mode de conduite en série, la réalisation de l'étape S33, et en réponse au fait que le mode de conduite du véhicule hybride n'est pas basculé vers le mode de conduite en série, la réalisation de l'étape S22 ;

S22 : l'actionnement d'un embrayage (3), la détermination établissant si le mode de conduite du véhicule électrique hybride est basculé vers le mode de conduite en série, en réponse au fait que le mode de conduite du véhicule électrique hybride est basculé vers le mode de conduite en série, la réalisation de l'étape S32, et en réponse au fait que le mode de conduite du véhicule électrique hybride n'est pas basculé vers le mode de conduite en série, la réalisation de l'étape S23 ;

S23 : le basculement d'une source d'alimentation du véhicule électrique hybride vers la source d'alimentation requise dans le mode de conduite en parallèle, la détermination établissant si le mode de conduite du véhicule électrique hybride est basculé vers le mode de conduite en série, en réponse au fait que le mode de conduite du véhicule électrique hybride est basculé vers le mode de conduite en série, la réalisation de l'étape S31, et en réponse au fait que le mode de conduite du véhicule électrique hybride n'est pas basculé vers le mode de conduite en série, la réalisation de l'étape S24 ;

S24 : la commande de tout le véhicule pour qu'il entre dans le mode de conduite en parallèle ;

S3 : en réponse au fait que l'état de basculement est que le mode de conduite du véhicule électrique hybride est basculé du mode de conduite en parallèle au mode de conduite en série, la réalisation de l'étape S31 à l'étape S34 :

S31 : le basculement de la source d'alimentation du véhicule électrique hybride vers la source d'alimentation requise dans le mode de conduite en série, la détermination établissant si le mode de conduite du véhicule électrique hybride est basculé vers le mode de conduite en parallèle, en réponse au fait que le mode de conduite du véhicule électrique hybride est basculé vers le mode de conduite en parallèle, la réalisation de l'étape S23, et en réponse au fait que le mode de conduite du véhicule électrique hybride n'est pas basculé vers le mode de conduite en parallèle, la réalisation de l'étape S32 ;

S32 : la séparation de l'embrayage (3), la détermination établissant si le mode de conduite du véhicule électrique hybride est basculé vers le mode de conduite en parallèle, en réponse au fait que le mode de conduite du véhicule électrique hybride est basculé vers le mode de conduite en parallèle, la réalisation de l'étape S32, et en réponse au fait que le mode de conduite du véhicule électrique hybride n'est pas basculé vers le mode de conduite en parallèle, la réalisation de l'étape S33 ;

S33 : l'ajustement du point de fonctionnement du moteur (1) sur les paramètres dans le mode de conduite en série, la détermination établissant si le mode de conduite du véhicule hybride est basculé vers le mode de conduite en parallèle, en réponse au fait que le mode de conduite du véhicule hybride est basculé vers le mode de conduite en parallèle, la réalisation de l'étape S21, et en réponse au fait que le mode de conduite du véhicule hybride n'est pas basculé vers le mode de conduite en parallèle, la réalisation de l'étape S34 ;

S34 : la commande de tout le véhicule pour qu'il entre dans le mode de conduite en série.

**2.** Procédé de commande permettant de basculer entre des modes de conduite en série/en parallèle d'un véhicule électrique hybride selon la revendication 1, dans lequel le procédé d'ajustement du point de fonctionnement du moteur (1) sur les paramètres dans le mode de conduite en parallèle comprend :
l'ajustement du couple du moteur (1) sur un couple cible du moteur (1) dans le mode de conduite en parallèle, et l'ajustement de la vitesse de rotation du moteur (1) pour qu'elle soit identique à la vitesse de rotation d'un moteur de conduite (4) dans le mode de conduite en série actuel.

**3.** Procédé de commande permettant de basculer entre des modes de conduite en série/en parallèle d'un véhicule électrique hybride selon la revendication 2, dans lequel il est déterminé que le couple cible du moteur (1) est $T_{Eng\ Tgt}$, le couple cible du moteur de conduite (4) est $T_{Tm_Tgt}$, la vitesse de rotation cible du moteur (1) est $n_{Eng_Tgt}$, un couple de demande du générateur (2) est $T_{Gm_Tgt}$, et dans le mode de conduite en parallèle, l'état de fonctionnement du moteur (1) présente trois sous-modes, qui comportent le sous-mode conduite et de charge, le sous-mode de conduite et de suralimentation, et le sous-mode de coupure d'huile du moteur (1), et

dans le sous-mode de conduite et de charge, $T_{Eng_Tgt} = \min (T_{Drv} - T_{Tm_PaSoc}, T_{Eng_PaMax})$ ;
dans le sous-mode de conduite et de suralimentation, $T_{Eng_Tgt}$ = min (TDrv,TEng_PaMax) ;
dans le sous-mode de coupure d'huile du moteur (1),

$$T_{Eng_Tgt} = -T_{Eng_Los} \ ;$$

$T_{Tm_Tgt} = T_{Drv}$ ; $n_{Eng_Tgt} = n_{Tm}$ ; $T_{Gm_Tgt} = -T_{Eng_Act} + (J_{Eng} + J_{Gm} + J_{Gear})dn_{Eng_Tgt}/dt + T_{CL}$ ;
dans les formules, $T_{Drv}$ désigne un couple de demande du conducteur, $T_{Tm_PaSoc}$ désigne un couple négatif de génération d'énergie du moteur de conduite (4) dans le mode de conduite en parallèle, qui est calculé sur la base du SoC actuel, $T_{Eng_PaMax}$ désigne une valeur limite supérieure de couple du moteur (1) dans le mode de conduite en parallèle, $T_{Eng_Los}$ désigne une valeur de couple de frottement du moteur (1) à la vitesse de rotation actuelle, $n_{Tm}$ désigne la vitesse de rotation actuelle du moteur de conduite (4), $T_{Eng_Act}$ désigne le couple réel du moteur (1), $J_{Eng}$ désigne l'inertie de rotation du moteur (1), $J_{Gm}$ désigne l'inertie de rotation du générateur (2), $J_{Gear}$ désigne l'inertie de rotation d'un train d'engrenages entre le moteur (1) et le générateur (2), et $T_{CL}$ désigne un couple de régulation de vitesse proportionnel-intégral (PI).

**4.** Procédé de commande permettant de basculer entre des modes de conduite en série/en parallèle d'un véhicule électrique hybride selon la revendication 1, dans lequel le procédé de basculement de la source d'alimentation du véhicule électrique hybride vers la source d'alimentation requise dans le mode de conduite en parallèle comprend :
la réduction du couple du générateur (2) à zéro, et la réduction du couple du moteur de conduite (4), dans lequel le couple réduit du moteur de conduite (4) est identique au couple réduit du générateur (2).

**5.** Procédé de commande permettant de basculer entre des modes de conduite en série/en parallèle d'un véhicule électrique hybride selon la revendication 4, dans lequel il est déterminé que le couple cible du moteur de conduite (4) est $T_{Tm_Tgt}$, et que le couple de demande du générateur (2) est $T_{Gm_Tgt}$, et

$$\begin{cases} T_{Gm_Tgt} = \min (0, T^*_{Gm_Tgt} + \sum \Delta T_{Stp}) \\ T_{Tm_Tgt} = \min (T_{Drv} - T_{Eng_Act}, T^*_{Tm_Tgt} - \sum \Delta T_{Stp}) \end{cases},$$

dans les formules, $T_{Drv}$ désigne le couple de demande du conducteur, $T_{Eng_Act}$ désigne le couple réel du moteur (1), $\Delta T_{stp}$ désigne une longueur de palier de réglage synchrone de couple du générateur (2) et du moteur de conduite (4), et $T^*_{Gm_Tgt}$ et $T^*_{Tm_Tgt}$ respectivement désignent des valeurs de sortie dans une période de temps de calcul précédente du couple de demande du générateur (2) et du couple cible du moteur de conduite (4).

**6.** Procédé de commande permettant de basculer entre des modes de conduite en série/en parallèle d'un véhicule électrique hybride selon la revendication 1, dans lequel l'étape de basculement de la source d'alimentation du véhicule électrique hybride vers la source d'alimentation requise dans le mode de conduite en série comprend :
l'augmentation du couple du générateur (2) pour absorber le couple du moteur (1), et le transfert du couple absorbé par le biais du générateur (2) au moteur de conduite (4) à la même amplitude.

**7.** Procédé de commande permettant de basculer entre des modes de conduite en série/en parallèle du véhicule électrique hybride selon la revendication 6, dans lequel il est déterminé que le couple cible du moteur (1) est $T_{Eng_Tgt}$,

le couple cible du moteur de conduite (4) est $T_{Tm_Tgt}$, le couple de demande du générateur (2) est $T_{Gm_Tgt}$, et dans le mode de conduite en parallèle, l'état de fonctionnement du moteur (1) présente trois sous-modes, qui comportent le sous-mode de conduite et de charge, le sous-mode de conduite et de suralimentation, et le sous-mode de coupure d'huile du moteur (1), et

dans le sous-mode de conduite et de charge, $T_{Eng_Tgt} = \min (T_{Drv} - T_{Tm_PaSoc}, T_{Eng_PaMax})$ ;
dans le sous-mode de conduite et de suralimentation, $T_{Eng_Tgt} = \min (T_{Drv}, T_{Eng_PaMax})$ ;
dans le sous-mode de coupure d'huile du moteur (1), $T_{Eng_Tgt} = -T_{Eng\ Los}$ ;

$$\begin{cases} T_{Gm_Tgt} = \max(-T_{Eng_Act}, T^{*}_{Gm_Tgt} - \sum \Delta T_{Stp}) \\ T_{Tm_Tgt} = \min(T_{Drv}, T^{*}_{Tm_Tgt} + \sum \Delta T_{Stp}) \end{cases}$$

dans les formules, $T_{Drv}$ désigne le couple de demande du conducteur, $T_{Tm_PaSoc}$ désigne le couple négatif de génération de puissance du moteur de conduite (4) dans le mode de conduite en parallèle, qui est calculé sur la base du SoC actuel, $T_{Eng_PaMa}x$ désigne la valeur limite supérieure de couple du moteur (1) dans le mode de conduite en parallèle, $T_{Eng_Los}$ désigne la valeur de couple de frottement du moteur (1) à la vitesse de rotation actuelle, $T_{Eng_Act}$ désigne le couple réel du moteur (1), $\Delta T_{stp}$ désigne la longueur de palier de réglage synchrone de couple du générateur (2) et du moteur de conduite (4), et $T^{*}_{Gm_Tgt}$ et $T^{*}_{Tm_Tgt}$ désignent respectivement des valeurs de sortie dans la période de temps de calcul précédente du couple de demande du générateur (2) et du couple cible du moteur de conduite (4).

**8.** Procédé de commande permettant de basculer entre des modes de conduite en série/en parallèle d'un véhicule électrique hybride selon la revendication 1, dans lequel le procédé de séparation de l'embrayage (3) comprend : en réponse au fait que le couple du générateur (2) est égal au couple du moteur (1), l'ajustement du couple du moteur de conduite (4) sur le couple cible du moteur de conduite (4) dans le mode de conduite en série, et en réponse au fait que la vitesse de rotation du moteur (1) est identique à la vitesse de rotation du moteur de conduite (4), la séparation de l'embrayage (3).

**9.** Procédé de commande permettant de basculer entre des modes de conduite en série/en parallèle d'un véhicule électrique hybride selon la revendication 8, dans lequel il est déterminé que le couple cible du moteur de conduite (4) est $T_{Tm_Tgt}$, la vitesse de rotation cible du moteur (1) est $n_{Eng_Tgt}$, et le couple de demande du générateur (2) est $T_{Gm_Tgt}$, et

$T_{Tm_Tgt} = T_{Drv}$ ; $n_{Eng_Tgt} = n_{Tm}$ ; $T_{Gm_Tgt} = -T_{Eng_Act} + (J_{Eng} + J_{Gm} + J_{Gear})dn_{Eng_Tgt}/dt + T_{CL}$ ;

dans les formules, $T_{Drv}$ désigne le couple de demande de conducteur, $n_{Tm}$ désigne la vitesse de rotation actuelle du moteur de conduite (4), $T_{Eng_Act}$ désigne le couple réel du moteur (1), $J_{Eng}$ désigne l'inertie de rotation du moteur (1), $J_{Gm}$ désigne l'inertie de rotation du générateur (2), $J_{Gear}$ désigne l'inertie de rotation du train d'engrenages réglé entre le moteur (1) et le générateur (2), et TCL désigne le couple de régulation de vitesse PI.

**10.** Procédé de commande permettant de basculer entre des modes de conduite en série/en parallèle d'un véhicule électrique hybride selon la revendication 1, dans lequel le procédé d'ajustement du point de fonctionnement du moteur (1) sur les paramètres dans le mode de conduite en série comprend :

l'ajustement respectif du couple et de la vitesse de rotation du moteur (1) sur le couple cible du moteur (1) et sur la vitesse de rotation cible du moteur (1) dans le mode de conduite en série ;
la détermination du couple cible du moteur (1) en tant que $T_{Eng_Tgt}$, et la détermination de la vitesse de rotation cible du moteur (1) en tant que $n_{Eng_Tgt}$, et

$$T_{Eng_Tgt} = -T_{Eng_Se} \; ; \; n_{Eng_Tgt} = n_{Eng_Se} \; ;$$

dans les formules, $T_{Eng_Se}$ et $n_{Eng_Se}$ désignent respectivement la valeur de couple et la valeur de vitesse de rotation du moteur (1) au niveau d'un point de puissance de génération d'énergie cible, qui sont calculées par le biais d'un module de gestion d'énergie de véhicule entier.

**11.** Véhicule, comprenant :

au moins un processeur ; et
une mémoire, configurée pour stocker au moins un programme ; et
en réponse au fait que l'au moins un programme est exécuté par l'au moins un processeur, l'au moins un processeur est configuré pour mettre en œuvre le procédé de commande pour le basculement entre des modes de conduite en série/en parallèle d'un véhicule électrique hybride selon l'une quelconque des revendications 1 à 10.

**12.** Support de stockage lisible par ordinateur, le support de stockage lisible par ordinateur étant configuré pour stocker un programme informatique, et en réponse à l'exécution par un processeur, le programme informatique met en œuvre le procédé de commande permettant de basculer entre les modes de conduite en série/en parallèle d'un véhicule électrique hybride selon l'une quelconque des revendications 1 à 10.

1
3
5
6
4
2

Fig.1

Determine a switching state of a driving mode of a hybrid electric vehicle
Switch from the parallel driving mode to the series driving mode
Switch the power source of the hybrid electric vehicle to a power source required in the parallel driving mode
Judge whether to switch to the parallel driving mode
Yes
Switch the power source of the hybrid electric vehicle to a power source required in the parallel driving mode
No
Separate the clutch
Judge whether to switch to the parallel driving mode
Yes
Actuate a clutch
Switch the power source of the hybrid electric vehicle to a power source required in the parallel driving mode
No
Switch the power source of the hybrid electric vehicle to a power source required in the series driving mode
Judge whether to switch to the parallel driving mode
Yes
Adjust a working point of an engine to parameters in the parallel driving mode
Actuate a clutch
Switch the power source of the hybrid electric vehicle to a power source required in the parallel driving mode
No
The whole vehicle enters the series driving mode
Switch from a series driving mode to a parallel driving mode
Adjust a working point of an engine to parameters in the parallel driving mode
Judge whether to switch to the series driving mode
Yes
Adjust the working point of the engine to parameters in the series driving mode
No
Actuate a clutch
Judge whether to switch to the series driving mode
Yes
Separate the clutch
Adjust the working point of the engine to parameters in the series driving mode
No
Switch the power source of the hybrid electric vehicle to a power source required in the parallel driving mode
Judge whether to switch to the series driving mode
Yes
Switch the power source of the hybrid electric vehicle to a power source required in the series driving mode
Separate the clutch
Adjust the working point of the engine to parameters in the series driving mode
No
The whole vehicle enters the parallel driving mode

Fig.2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202110813193
- DE 102008053505 A1
- DE 102015222692 A1
- DE 102015224077 A1